# EUROPÄISCHE PATENTSCHRIFT

(11) **EP 0 686 341 B1**
(45) Veröffentlichungstag und Bekanntmachung des Hinweises auf die Patenterteilung: **15.01.1997**
(21) Anmeldenummer: 95107207.3
(22) Anmeldetag: 12.05.1995
(51) Int. Cl.: A01C 7/20

(54) **Scheibensäschar**
Seeding disc coulter
Soc senoir à disque

(30) Priorität: 07.06.1994 DE 4419832
(43) Veröffentlichungstag der Anmeldung: 13.12.1995
(73) Patentinhaber: Amazonen-Werke H. Dreyer GmbH & Co. KG, D-49205 Hasbergen (DE)
(72) Erfinder: Steenken, Bernd, Dipl.-Ing., D-49751 Sögel (DE)

(56) Entgegenhaltungen:
- EP-A- 0 401 593
- EP-A- 0 546 974
- DE-A- 3 021 528

## Beschreibung

Die Erfindung betrifft ein Scheibensäschar gemäß des Oberbegriffes des Patentanspruches 1.

Ein derartiges Scheibensäschar ist in der deutschen Offenlegungsschritt 30 21 528 beschrieben. Dieses Scheibensäschar ist als Einscheibenschar ausgebildet und mit einem Scharhalter in aufrechter Ebene bewegbar am Rahmen einer Sämaschine angeordnet. An dem Scharkörper ist im Bereich des Auslaufendes des Saatauslaufstutzens eine in Höhenrichtung verstellbare Tiefenführungskufe angeordnet. Über diese Tiefenführungskufe ist die Ablagetiefe des Saatgutes im Boden bestimmbar und einstellbar. Die Tiefenführungskufe ist mittels eines am Scharkörper befestigten Einstell- und Halteelementes angeordnet. Die Tiefenführungskufe ist frei verschwenkbar an dem Einstell- und Halteelement angeordnet. Das Einstell- und Halteelement ist mittels eines Schwenkgelenkes und einer nicht näher erläuterten Einstellvorrichtung an dem Scharkörper angeordnet, so daß die Tiefenführungskufe eingestellt werden kann.

Dieses Scheibensäschar hat sich in der Praxis bewährt. Jedoch ist die Anordnung des Einstell- und Halteelementes am Scharkörper nicht zufriedenstellend. Insbesondere ist die Einstellung relativ schwierig durchzuführen, weil sich die Einstellvorrichtung im unteren Bereich des Scheibenschares befindet. Auch ist die Tiefenführungskufe nicht in einfacher Weise von dem Scharkörper abzunehmen.

Der Erfindung liegt die Aufgabe zugrunde, eine einfache Befestigungsmöglichkeit des Einstell- und Halteelementes der Tiefenführungskufe an dem Scharkörper bei gleichzeitig guter Einstellmöglichkeit zu schaffen.

Diese Aufgabe wird erfindungsgemäß durch die kennzeichnenden Merkmale des Anspruches 1 gelöst. Infolge dieser Maßnahmen wird in überraschend einfacher Weise eine einfache Einstellung der Tiefenführungskufe sowie eine leichte Montage und Demontage der Tiefenführungskufe am Scheibensäschar erreicht. Somit kann also in den Fällen, wenn die Anordnung der Tiefenführungskufe am Scheibensäschar aufgrund der Einsatzbedingungen nicht erwünscht ist, in einfacher Weise abgenommen werden. Dieses ist insbesondere dann der Fall, wenn sich sehr viele Pflanzenrückstände auf der Bodenoberfläche befinden. Andererseits ist es jedoch auch in einfachster Weise möglich, die Tiefenführungskufe schnell wieder zu montieren. Hierbei hat sich als vorteilhaft herausgestellt, daß die eine Verbindung als Steckverbindung ausgebildet ist. Hierbei ist vorteilhaft, wenn die Steckverbindung die untere Befestigung der Tiefenführungskufe am Scharkörper bildet. Hierbei ist die Steckverbindung dann gleichzeitig als Schwenkgelenk ausgebildet. Somit läßt sich dann in vorteilhafter Weise die Klemmverbindung im oberen Bereich des Scheibensäschares anordnen, so daß sie leicht und bequem zugänglich ist.

Hierbei ist in bevorzugter Ausführung vorgesehen, daß die Klemmverbindung im oberen Bereich des Scharkörpers, im am besten zugänglichen Bereich, angeordnet ist.

Eine einfache Ausbildung der Klemmverbindung ergibt sich dadurch, daß die Klemmverbindung als Schraubverbindung mit einem Langloch ausgebildet ist. Die schnelle Abnahme bzw. Montagemöglichkeit der Tiefenführungskufe am Scharkörper wird noch dadurch verbessert, daß das Langloch auf seinem einen Ende eine Erweiterung aufweist, die zumindest die Größe des Schraubenkopfes der Schraube oder der Unterlegscheibe der Schraubverbindung aufweist. Hierdurch ist es dann möglich, daß ohne ein vollständiges Entfernen der Mutter der Schraubverbindung das Einstell- und Halteelement abgenommen werden kann, weil nach einem geringen Lösen der Schraubverbindung das Einstell- und Halteelement nur soweit verschwenkt zu werden braucht, bis die Erweiterung mit dem Schraubenkopf der Schraube bzw. der Unterlegscheibe der Schraubverbindung zur Deckung gebracht ist. Das Einstell- und Halteelement kann dann in einfacher Weise vom Scharkörper abgeschwenkt und aus der Steckverbindung herausgezogen werden. Das Einstell- und Halteelement mit der Tiefenkufe ist so einfach abgenommen. Genauso einfach läßt sich in umgekehrter Reihenfolge das Einstell-und Halteelement mit der Tiefenführungskufe wieder am Scharkörper befestigen.

Es ist auch möglich, die Klemmverbindung als Klemmknebel auszubilden.

Eine vorteilhafte Ausgestaltung des Scheibensäschares wird dadurch erreicht, daß mit der Schraubverbindung gleichzeitig der Halter des Abstreifers für die Scheibe des Scheibenschares am Scharkörper befestigt ist.

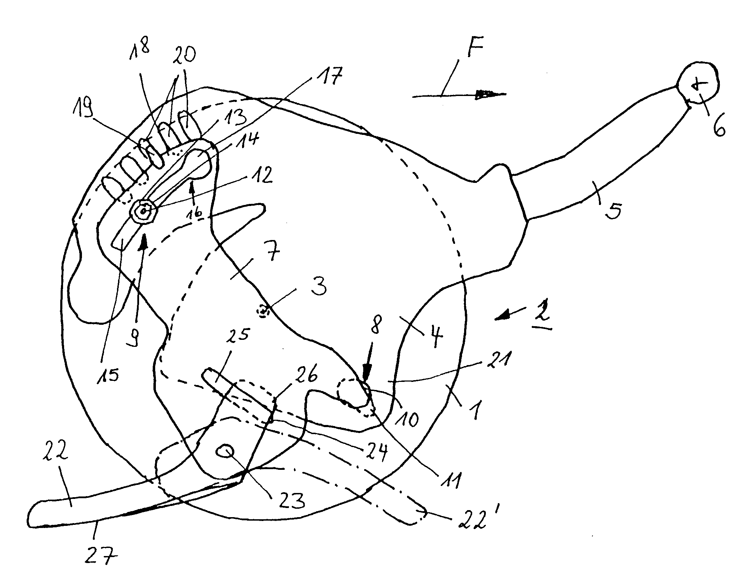

Weitere Einzelheiten der Erfindung sind der Beispielsbeschreibung und der Zeichnung zu entnehmen. Die Zeichnung zeigt
ein Einscheibensäschar in Seitenansicht.

Die Scharscheibe 1 des Einscheibensäschares 2 ist mittels eines Lagers 3 an dem Scharkörper 4 drehbar befestigt. Der Scharkörper 4 weist den Scharhalter 5 auf, über den das Einscheibenschar 2 mittels eines Gelenkes 6 an dem Rahmen einer nicht dargestellten Sämaschine in aufrechter Ebene befestigt ist. An dem Scharhalter 5 greift eine nicht dargestellte Zugfeder an, mit der das Scheibenschar 2 gegen den Boden gezogen wird.

An dem Scharkörper 4 ist das Einstell- und Halteelement 7 angeordnet. Das Einstell- und Halteelement 7 ist mit der Steckverbindung 8 und der Klemmverbindung 9 am Scharkörper 4 befestigt. Die Steckverbindung 8 weist eine Öffnung 10 im Scharkörper 4 auf, in die die Lasche 11 des Einstell- und Halteelementes 7 eingesteckt wird. Die Klemmverbindung 9 weist die Schraube 12 mit der Unterlegscheibe 13 und der Mutter 14 sowie das Langloch 15 auf. Am Ende 16 des Langloches 15 befindet sich die Erweiterung 17, die eine Größe aufweist, die größer oder zumindest der Größe der Unterlegscheibe 13 der als Schraubverbindung ausgebildeten Klemmverbindung 9 entspricht. An dem oberen Ende 18 des Einstell- und Halteelementes 7 befindet sich das in das Einstell- und Halteelement 7 eingeprägte Rastelement 19, welches in die Vertiefungen oder Aussparungen 20, die sich in dem Scharkörper 4 befinden, einrasten kann.

Die Steckverbindung 8 befindet sich im unteren vorderen Bereich 21 des Scharkörpers 4, während sich die Klemmverbindung 9 oben am Scharkörper 4, in dem am besten zugänglichen Bereich, befindet. Somit ist also eine einfache Einstellung möglich.

An dem Einstell- und Halteelement 7 ist an dem unteren Ende des Einstell- und Halteelementes 7 in einem Abstand zu der Lasche 11 die Tiefenführungskufe 22 mittels des Gelenkes 23 schwenkbar befestigt. In der Betriebsstellung befindet sich die Tiefenführungskufe 22 in der mit durchzogenen Linien dargestellten Position.

Hierbei bestimmt das Ende 24 des Langloches 25 in dem Scharkörper 4, mit dem das über das Gelenk 23 hinausstehende Ende 26 der Tiefenführungskufe 22 zur Anlage kommt, die Betriebsstellung.

Sollte die Maschine rückwärts rollen, schwenkt die Tiefenführungskufe 22 in die mit strichpunktierten Linien dargestellte Position 22'.

Die Steckverbindung 8 bildet das Schwenkgelenk, welches eine quer zur Fahrtrichtung F verlaufende Schwenkachse aufweist, für das Einstell- und Halteelement 7. Durch Verschwenken des Einstell- und Halteelementes 7 wird die relative Position der unteren Auflagefläche 27 der Tiefenführungskufe 22 zu dem unteren Punkt des Einscheibenschares 2 eingestellt, so daß die gewünschte Eindringtiefe der Scharscheibe 1 in den Boden und somit die Ablagetiefe des Saatgutes über das Einstell- und Halteelement 7 eingestellt werden kann. Die gewünschte Position wird durch die Klemmverbindung 9 fixiert.

## Patentansprüche

1. Scheibensäschar (1), insbesondere Einscheibenschar, das mit einem Scharhalter (5) in aufrechter Ebene bewegbar an einem Rahmen angeordnet ist, mit in Höhenrichtung verstellbarer Tiefenführungskufe (22), über die die Ablagetiefe des mit dem Säschar (2) abgelegten Saatgutes im Boden bestimmbar ist, wobei die Tiefenführungskufe (22) an einem an dem Scharkörper (4) befestigten Einstell- und Halteelement (7) angeordnet ist, welches mittels eines Schwenkgelenkes (8), welches eine quer zur Fahrtrichtung (F) verlaufende Schwenkachse aufweist, verschwenkbar ist, dadurch gekennzeichnet, daß das Einstell- und Halteelement (7) mit einer Steckverbindung (8) und einer Klemmverbindung (9) an dem Scharkörper (4) befestigt ist, und daß die Steckverbindung (8) als Schwenkgelenk ausgebildet ist.

2. Scheibensäschar nach Anspruch 1, dadurch gekennzeichnet, daß die Klemmverbindung (9) im oberen Bereich des Scharkörpers (4), im am besten zugänglichen Bereich, angeordnet ist.

3. Scheibensäschar nach Anspruch 1, dadurch gekennzeichnet, daß die Klemmverbindung (9) als Schraubverbindung mit einem Langloch (15) ausgebildet ist.

4. Scheibensäschar nach Anspruch 3, dadurch gekennzeichnet, daß das Langloch (15) auf seinem einen Ende (16) eine Erweiterung (17) aufweist, die zumindest die Größe des Schraubenkopfes der Schraube (12) oder der Unterlegscheibe (13) der Schraubverbindung aufweist.

5. Scheibensäschar nach Anspruch 1, dadurch gekennzeichnet, daß die Klemmverbindung einen Klemmknebel aufweist.

6. Scheibensäschar nach einem der Ansprüche 3 oder 4, dadurch gekennzeichnet, daß mit der Schraubverbindung gleichzeitig der Halter des Abstreifers für die Scheibe des Scheibenschares am Scharkörper befestigt ist.

## Claims

1. Disc sowing coulter (1), more especially a single disc coulter, which is disposed on a frame by means of a coulter holder (5) so as to be displaceable in a vertical plane, including a depth control guide means (22), which is adjustable in the vertical direction and via which the depth at which the seeds, deposited by the sowing coulter (2), are deposited in the ground can be determined, the depth control guide means (22) being disposed on an adjusting and retaining element (7), which is mounted on the coulter body (4) and is pivotable by means of a pivot joint (8), which has a pivot axis extending transversely relative to the direction of travel (F), characterised in that the adjusting and retaining element (7) is mounted on the coulter body (4) by an insert connection (8) and a clamping connection (9), and in that the insert connection (8) is configured as a pivot joint.

2. Disc sowing coulter according to claim 1, characterised in that the clamping connection (9) is disposed in the upper region of the coulter body (4), in the most accessible region.

3. Disc sowing coulter according to claim 1, characterised in that the clamping connection (9) is configured as a screw connection with an elongate slot (15).

4. Disc sowing coulter according to claim 2, characterised in that the elongate slot (15) has, at its one end (16), a widened portion (17) which at least corresponds in size to the head of the screw (12) or the washer (13) of the screw connection.

5. Disc sowing coulter according to claim 1, characterised in that the clamping connection has a clamping bar.

6. Disc sowing coulter according to one or more of the preceding claims, characterised in that the holder of the scraper for the disc of the disc coulter is mounted on the coulter body simultaneously with the screw connection.

## Revendications

1. Soc de semoir à disque (1) notamment soc à un disque monté par un support de soc (5) de manière mobile dans un plan vertical sur le châssis, ayant un patin de réglage en profondeur (22) réglable en hauteur, qui définit la profondeur de dépose de la semence déposée par le soc de semoir (2) dans le sol, le patin de guidage en profondeur (22) étant monté à un élément de réglage et de fixation (7) du corps de soc (4), qui peut pivoter grâce à l'articulation pivotante (8) dont l'axe est transversal à la direction de déplacement (F),
caractérisé en ce que
l'élément de réglage et de fixation (7) est fixé au corps de soc (4) par une liaison par enfichage (8) et une liaison par serrage (9), la liaison par enfichage (8) étant une articulation de pivotement.

2. Soc de semoir à disque selon la revendication 1,
caractérisé en ce que
la liaison par serrage (9) est prévue dans la zone supérieure du corps de soc (4), à l'endroit le plus facilement accessible.

3. Soc de semoir à disque selon la revendication 1,
caractérisé en ce que
la liaison par serrage (9) est une liaison à vis avec un trou oblong (15).

4. Soc de semoir à disque selon la revendication 2,
caractérisé en ce que
le trou oblong (15) comporte une partie élargie (17) à l'une de ses extrémités (16), cette partie élargie ayant au moins la dimension de la tête de la vis (12) ou de la rondelle (13) de la liaison à vis.

5. Soc de semoir à disque selon la revendication 1,
caractérisé en ce que
la liaison par serrage comporte un levier de serrage.

6. Soc de semoir à disque selon l'une ou plusieurs des revendications précédentes,
caractérisé en ce que
le support de la raclette du disque du soc de semoir à disque est fixé en même temps avec la liaison à vis sur le corps de soc.
